# EUROPEAN PATENT APPLICATION

(11) **EP 4 144 435 A1**
(43) Date of publication of application: **08.03.2023**
(21) Application number: 21194405.3
(22) Date of filing: 01.09.2021
(51) Int. Cl.: B01J 8/18, B01J 8/24, B01J 19/18, C08F 10/00, C08F 8/00

(54) **GAS PHASE POLYMERIZATION PROCESS WITH IMPROVED GAS RECYCLING**

(71) Applicant: Borealis AG, 1020 Vienna (AT)
(72) Inventor: KUUSISTO, Mika, 06101 Porvoo (FI); ZITTING, Samuli, 06101 Porvoo (FI); ELOVAINIO, Erno, 06101 Porvoo (FI); LYLYKANGAS, Mikko, 06101 Porvoo (FI); MATAKAINEN, Pasi, 06850 Kullo (FI)
(74) Representative: Kador & Partner PartG mbB

(57) **Abstract**

A gas phase polymerization assembly comprising a gas phase polymerization reactor having at least one inlet and at least one outlet, a circulation gas compression unit having an inlet and an outlet, whereby the inlet of the circulation gas compression unit is fluidly connected to the at least one outlet of the gas phase polymerization reactor by an unreacted gas line; a flush gas compression unit having an inlet and an outlet, wherein the inlet of the flush gas compression unit is fluidly connected to the outlet of the circulation gas compression unit by a pressurized unreacted gas line; a circulation line fluidly connecting the pressurized unreacted gas line with the at least one inlet of the gas phase polymerization reactor; a flush gas withdrawal line connected to the outlet of the flush gas compression unit.

## Description

The present invention relates to the field of gas phase polymerization, in particular to the field of polyolefin gas phase polymerization. Particularly, the present invention is directed towards improved gas recycling in said gas phase polymerization process.

### Background

Generally, in a gas phase polymerization process, polymers are polymerized from the gas phase, i.e. the monomers are provided in the polymerization reactor in gaseous form. Typically, not all of the monomers are consumed during operation, but a part of them leaves the reactor again. This is in particular true for fluidized bed gas phase reactors, in which the polymerization reaction and therefore the quality of the product benefits from the adjusted monomer gas stream in the reactor.

In gas phase polymerization processes known in the prior art, the gases leaving the reactor are usually collected, purified and at least partially reintroduced into the reactor for further polymerization. This reduces waste material, environmental impact reduction (no venting off), and energy efficiency (reduced temperature and pressure losses). This recycling is usually called circulation.

In the prior art, the circulation of gases back to the gas phase polymerization rector is usually carried out using a single compressor. The gas flow through the compressor, which is required to fluidize the fluidization bed in the gas phase polymerization reactor, is typically in the range of 1100 to 1700 t/h.

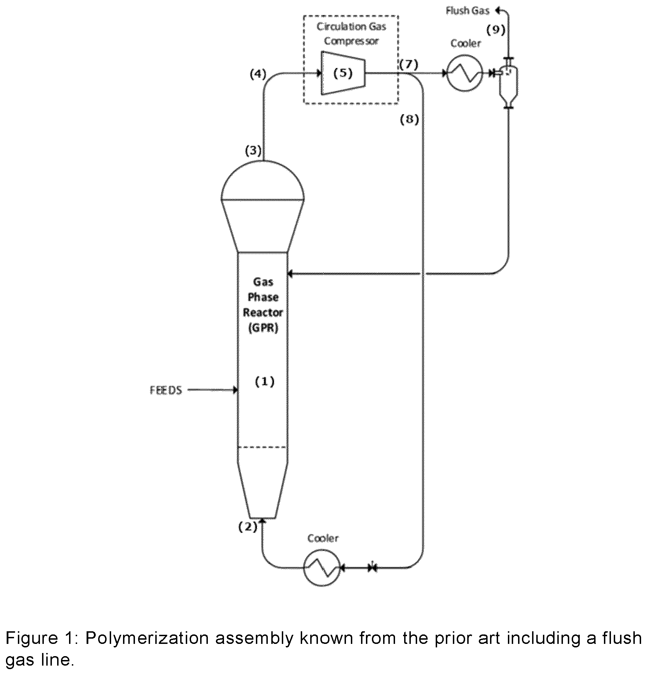

Nevertheless, gas phase polymerization processes often require that not all of the gases leaving the polymerization reactor are reintroduced again. There can be the need for flush gases, which are used in various parts of the process, in particular the gas phase reactor of the polymerization process, and which can provide energy to said parts. These flush gases are usually branched off the circulation loop back to the gas phase polymerization reactor (cf. Figure 1).

Flush gases need to overcome pressure losses and are therefore usually provided at higher pressure levels in comparison to the pressure in the circulation loop back to the gas phase polymerization reactor. To provide a pressure level high enough for the flush gasses, the circulation gas flow is artificially choked with a flow restriction element to generate sufficient pressure margin for the flush gasses. Outcome is the higher power consumption of the compressor running the overall circulation.

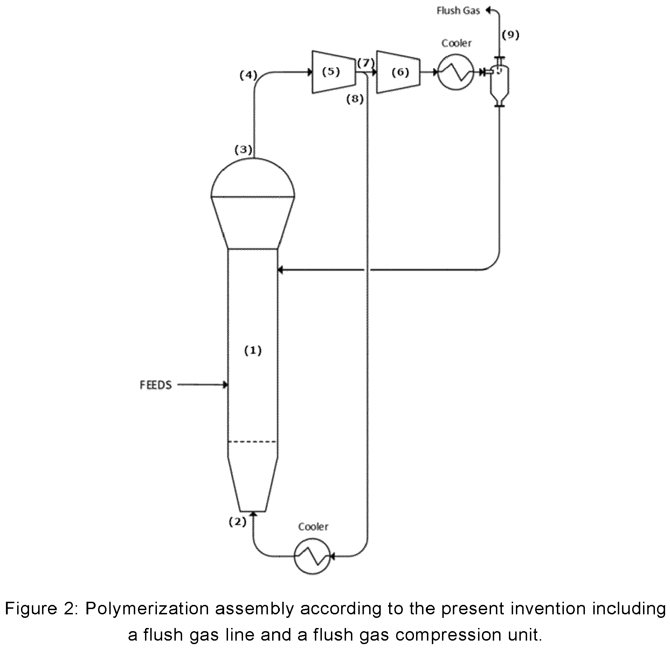

Furthermore, gas phase polymerization processes also often require that parts of the circulation gas are not directly recycled in the reactor, but are lead to a recovery area (cf. Figure 2). Reason is that the gas composition needs to be adjusted for reintroduction into the polymerization reactor, i.e. compounds in the gaseous stream having higher or lower molecular weights than the target monomer or comonomer need to be removed from the stream. Such a venting flow can be large in particular when producing polypropylene block polymers, as the major part of propylene has to be removed from the circulation loop to keep the gas composition right. Also in case of splits between reactors in multi-reactor plants, (i.e. 60:40), the circulation gas composition needs to be adjusted.

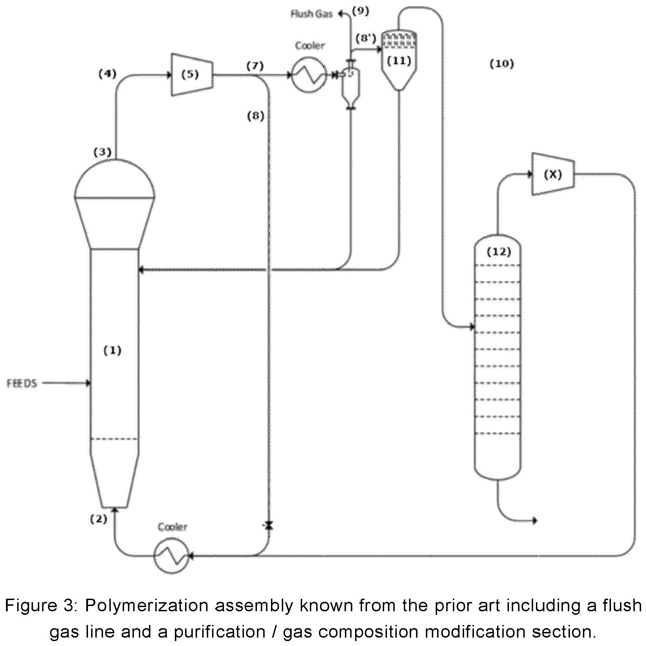

The removal equipment in such recovery sections usually causes significant drops in pressure. Thus, typically, the gases reused from the recovery station in the gas phase reactor have to be pressurized again by a vent gas compressor before reentering the circulation loop (cf. Figure 3). Besides a heavy column also gas/condensed phase separation means can cause such pressure drops, such as depressurizing in a low pressure flash separator. While such a solution is increasing the demand of energy by increasing the requirement of compressor capacity, filtering processes are also known from the prior art. Nevertheless, also in such a case, the total circulation of gases is often so large that it is not economically feasible to pressurize the whole flow to high pressures.

### Problem of the invention

Therefore, one problem of the present invention is that pressure and thus energy losses are introduced in the circulation loop of a gas phase polymerization reactor by the need of branching off flush gases therefrom.

A further problem of the present invention is that in case at least parts of the circulation gases need to be adjusted in their composition, i.e. purified, before being fed back into the circulation loop, the pressure of these parts needs to be increased again leading to higher energy consumption of the process.

### Object of the present invention

It is therefore an object of the present invention to provide a gas phase polymerization process, in particular a gas phase polyolefin polymerization process, utilizing a reaction gas circulation loop comprising a flush gas branching and/or a purification/gas composition modification section being more energy efficient.

### Summary of the invention

It now has been surprisingly found that above-mentioned problem is solved and object is achieved by a process for gas phase polymerization of a polymer, comprising the steps of
a) gas phase polymerizing a polymer in a polymerizing reactor (1);
b) withdrawing an unreacted gas stream (4) from the polymerizing reactor (1);
c) pressurizing the unreacted gas stream (4) in a circulation gas compression unit (5) yielding a pressurized unreacted gas stream (7);
d) branching a circulation gas stream (8) off the pressurized unreacted gas stream (7);
e) reintroducing the circulation gas stream (8) into step a); and
f) pressurizing the pressurized unreacted gas (7) stream in a flush gas compression unit (6) yielding a flush gas stream (9).

Furthermore, it has now been surprisingly found out that above-mentioned problem is solved and object is achieved by a polymerization assembly comprising
- a gas phase polymerization reactor (1) having at least one inlet (2) and at least one outlet (3),
- a circulation gas compression unit (5) having an inlet and an outlet, whereby the inlet of the circulation gas compression unit (5) is fluidly connected to the at least one outlet (3) of the gas phase polymerization reactor (1) by an unreacted gas line (4);
- a flush gas compression unit (6) having an inlet and an outlet, wherein the inlet of the flush gas compression unit (6) is fluidly connected to the outlet of the circulation gas compression unit (5) by a pressurized unreacted gas line (7);
- a circulation line (8) fluidly connecting the pressurized unreacted gas line (7) with the at least one inlet (2) of the gas phase polymerization reactor (1);
- a flush gas withdrawal line (9) connected to the outlet of the flush gas compression unit (6).

### Definitions

The term 'unreacted gas' as used herein generally determines the top output of a gas phase polymerization reactor. Hence, a stream withdrawn from the top of a gas phase polymerization reactor comprises mainly unreacted monomers and optionally comonomers, but also hydrogen, fluidization gas and also parts of reacted molecules, i.e. entrained polymers or side products.

### Description of the drawings

Figure 1 shows a gas phase polymerization assembly according to the prior art having a flush gas withdrawal line.
Figure 2 shows a gas phase polymerization assembly according to one embodiment of the present invention having a flush gas withdrawal line.
Figure 3 shows a gas phase polymerization assembly according to the prior art having a flush gas withdrawal line and a purification/gas composition modification section.
Figure 4 shows a gas phase polymerization assembly according to one embodiment of the present invention having a flush gas withdrawal line and a purification/gas composition modification section.

### Reference signs

(1) Polymerization reactor
(2) One or more inlet of the polymerization reactor
(3) One or more outlet of the polymerization reactor
(4) Unreacted gas line/stream
(5) Circulation gas compression unit
(6) Flush gas compression unit
(7) Pressurized unreacted gas line/stream
(8) Circulation gas line/stream
(9) Flush gas withdrawal line/stream
(10) Purification/gas modification section
(11) Filter
(12) Heavy column

### Detailed description of the invention

In the following two embodiments of the present invention are discussed in particular in comparison to respective embodiments known from the prior art (i.e. Figures 1/2 and 3/4).

### Polymerization assembly

Figure 1 represents a case known from the prior art, whereas Figure 2 represents the most general embodiment of the present invention. Figures 1 and 2 show polymerization assemblies comprising a polymerization reactor (1) having at least one inlet (2) and at least one outlet (3). According to typical design of fluidized bed gas phase polymerization reactors, the at least one inlet is preferably located in the lower half of the reactor, most preferably in the bottom zone, whereas the at least one outlet (3) is preferably located in the upper half, most preferably in the top zone of the polymerization reactor (1). This is insofar advantageous as a gas stream from bottom to top of the polymerization reactor (1) can be achieved to form a fluidized bed with polymerized material. Hence, the polymerization reactor (1) is preferably a fluidized bed gas phase polymerization reactor. Furthermore, the polymerization reactor has a second inlet (2a) for feeding fresh monomer and optionally comonomer(s).

Preferably, the polymerization reactor is a gas phase polymerization reactor, more preferably a fluidized bed gas phase polymerization reactor. Therefore, preferably, the reactor has a substantially cylindrical shape, whereas the reactor is placed such that the symmetry axis of the cylindrical shape is parallel to the direction of the gravitational force. The polymerization reactor (1) has an upper half and a lower half, whereas the upper half is the part of the reactor above an area perpendicular to the symmetry axis of the cylinder and located at the half of the length of the cylinder, whereas 'above' has to be understood with respect to the gravitational force. Likewise, whereas the lower half is the part of the reactor below an area perpendicular to the symmetry axis of the cylinder and located at the half of the length of the cylinder, whereas 'below' has to be understood with respect to the gravitational force.

Furthermore, the polymerization reactor (1) includes a bottom zone, a middle zone and a top zone. The bottom zone forms the lower part of the reactor in which typically the base of the fluidized bed is formed. Above the bottom zone and in direct contact with it is the middle zone. The middle zone and the upper part of the bottom zone contain the fluidized bed. Preferably, the base of the bed forms in the bottom zone with no fluidization grid, or gas distribution plate, being present. Because there is preferably no fluidization grid, a free exchange of gas and particles between the different regions within the bottom zone and between the bottom zone and the middle zone can occur. Finally, above the middle zone and in direct contact therewith is the top zone. Preferably, the top zone and the bottom zone have a conical shape.

The unreacted gas removed from the at least one outlet (3) is led to the inlet of a circulation gas compression unit (5) via the unreacted gas line (4). In the circulation gas compression unit (5), the unreacted gas is pressurized. From the outlet of the circulation gas compression unit (5) the pressurized unreacted gas is withdrawn via the pressurized unreacted gas line (7), which is split up in a flush gas line (9) and the circulation gas line (8), whereas the circulation gas line (8) is returned into the polymerization reactor (1) via the at least one inlet (2). In the reactor assembly of the prior art, the pressure in the circulation gas line (8) is too high to be introduced in the polymerization reactor (1). The polymerization reactor needs to have a certain gas flow characteristic, in particular if the polymerization reactor is a fluidized bed polymerization reactor. Unfavorable gas flow characteristics can lead to polymerization material agglomerating at the reactor walls and other parts of the reactor leading to increased temperature control. Furthermore, the height of the fluidized bed is influenced by the gas flow characteristic. Lower fluidized beds lead to lower production efficiency, higher fluidized beds lead to polymer entrainment into the circulation gas line leading to fouling of the downstream equipment. Therefore, the pressure and thus the gas flow velocity at the inlet (2) of the polymerization reactor (1) need to be accurately adjusted. On the other hand, the flush gas as withdrawn from the flash gas line (9) also needs to have a certain pressure when being used as an energy supply for other means in the process. Usually, the pressure needed in the flash gas is higher than the pressure needed at the inlet (2) of the polymerization reactor (1). Therefore, in the reactor assembly of the prior art, a pressure drop is usually realized via a choking valve in the circulation line (8) before entering the polymerization reactor (1). As a result, the system loses energy and also small amounts of material rendering the process less efficient.

In the present invention according to Figure 2, the polymerization assembly preferably does not need such a means for reducing the pressure, i.e. a choking valve, in the circulation line (8). Therefore, preferably, the polymerization assembly of the present invention does not comprise said means for reducing the pressure, i.e. a choking valve, in the circulation line (8). Instead, a flush gas compression unit (6) is implemented in the pressurized unreacted gas line (7) after the circulation line (8) deviates from the unreacted gas line (7) and before the flush gas line (9) is withdrawn from the unreacted gas line (7). This setup has the advantage that the pressure in the circulation line (8) can be adjusted exactly to the needs of the polymerization reactor (1) by the circulation gas compression unit (5). On the other hand, the pressure needed in the flush gas line (9), which is typically higher than the pressure needed in the circulation line (8), is further adjusted by the flash gas compressor (6). This setup makes the means for reducing the pressure in the circulation line (8), i.e. the choking valve, and thus the energy and material loss obsolete, rendering it more energy efficient. Furthermore, it reduces the shaft power needed for the circulation gas compression unit (5), as this compression unit does not need to compress the total volume of the circulation gas to such high pressure levels as done in the prior art.

Preferably, the circulation gas compression unit (5) comprises, preferably consists of, one or more compressors, fans or set of fans suitable for compressing hydrocarbons. Likewise, preferably, the flush gas compression unit (6) comprises, preferably consists of, one or more compressors, fans or set of fans suitable for compressing hydrocarbons.

In a first more preferred embodiment, the circulation gas compression unit (5) and/or the flush gas compression unit (6) comprise, preferably consist of, API 617 Chapter 3 integrally geared compressors, which are energy efficient and result in smaller foot prints. Furthermore, upgrades in the reactor assembly can be achieved more easily.

In a second more preferred embodiment of the invention, the circulation gas compression unit (5) and the flush gas compression unit (6) are mechanically connected to the same source of rotational energy, such as a motor. Preferably, the circulation gas compression unit (5) and the flush gas compression unit (6) are overhung compressor stages on opposite sides of the motor, preferably the electrical motor.

Preferably, the flush gases are cooled after being compressed by the flush gas compression unit (5) resulting in a higher power saving benefit. However, for some systems, such as certain polyethylene polymerization systems, cooling down should be avoided to prevent the formation of a two-phase system after cooling down. Thus, preferably, the polymerization assembly comprises a cooler with an inlet and an outlet, wherein the inlet is fluidly connected to the outlet of the flush gas compression unit (6) and the outlet is fluidly connected to the flush gas withdrawal line (9).

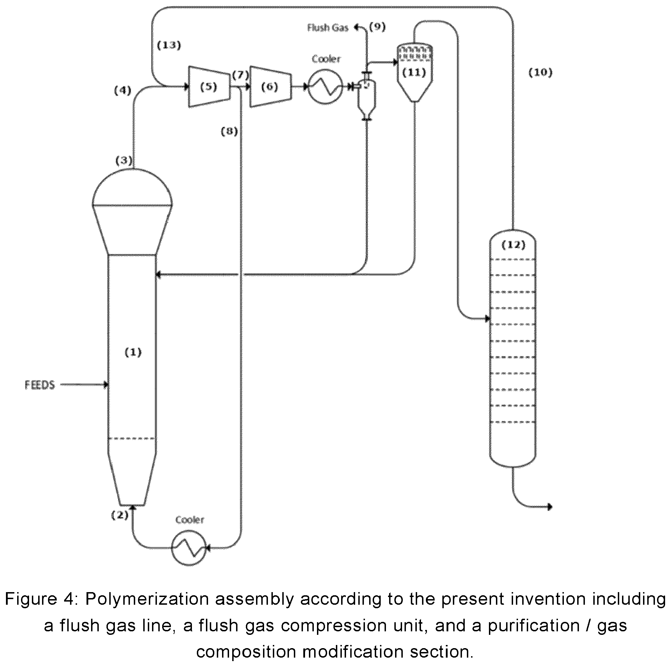

Figure 4 shows a preferred embodiment of the present invention. The respective process known from the prior art is shown in Figure 3. Generally, these embodiments involve a purification or gas modification section (10). Usually, the circulation gas needs to be adopted in composition before re-entering the polymerization reactor (1). Unreacted gas streams might simply have impurities such as entrained polymer or side reaction products, which need to be screened out of the gas stream. Furthermore, the ratio of monomers/comonomers can change in the gas composition during the polymerization in the polymerization reactor. Hence, such ratios might have to be adjusted before entering the reactor again. Therefore, in such a purification / gas composition modification section several means can be applied. In the present embodiment as an example, a filter (11) and a heavy columns (12) are part of the purification / gas modification section. Nevertheless, the skilled person knows what other means to introduce into this section to achieve effects on the purity and gas composition of the circulation gas.

Usually, such means require the pressure to be let down before or during performing respective purification / separation tasks. This can be done, for example, by a low pressure flash separator, which at the same time lowers the pressure of the introduced gas stream and performs a separation into a vapour and a condensed phase. However, such pressure let down usually requires the circulation gas stream to be re-pressurized before being reintroduced into the polymerization reactor (1). Reason is the same as explained above, i.e. that the reactor conditions usually require a defined pressure of the introduced gas streams.

Figure 3 shows such a setup known from the prior art. The base setup is in accordance with the more general setup as found in Figure 1. Hence, the unreacted gas in the unreacted gas line (4) is pressurized using the circulation gas compression unit (5), the resulting lines are split up, whereas one branch constitutes the circulation gas line (8), which is reintroduced into the inlet (2) of the polymerization reactor (1) after passing a valve suitable for a pressure let down. In addition to the setup of Figure 1, a second circulation gas line (8') is shown, which is lead into a purification / gas composition modification section (10) comprising a filter (11) and a heavy columns (12). As stated above, the general principle of the present invention is not limited to such an embodiment. The filter (11) and the heavy column (12) are only used to further illustrate the function of the purification / gas composition modification section (10). Both the filter (11) and the heavy columns (12) separate the introduced streams into a vapour and a condensed stream, whereas the condensed streams may be reintroduced into the polymerization reactor or not. The resulting vapour stream of filter (11) is introduced into the heavy columns (12), from which again is a vapour stream removed. This vapour stream is again reintroduced into the inlet (2) of the polymerization reactor (1) after re-pressurizing using the compressor (X). Hence, such pressure let down and re-pressurization constitutes an energy inefficient process.

The preferred embodiment of the present invention as depicted in Figure 4 solves this problem by a modification of the setup. The base setup is the most general embodiment of the present invention as depicted in Figure 2. Hence, the present embodiment also uses a flush gas compression unit (6) compressing the flush gas after the branching off of the circulation gas line (8). Therefore, the present preferred embodiment of the invention according to Figure 4 has the same advantages over the prior art as the most general embodiment of the present invention as found in Figure 2.

In comparison to the process known from the prior art and depicted in Figure 3, the preferred embodiment of the present invention utilizes a purified gas line (13), which corresponds to the vapour stream of the heavy column (12) in Figure 4, which generally contains the gas stream purified or gas composition modified by the purification / gas modification section (10). This purified gas line (13) is connected to the inlet of the circulation gas compression unit (5). Thus, the re-pressurization is performed in the circulation gas compression unit (5) and the gas composition is either modified by the introduced gas stream or the gas stream is introduced in a purified form or both. This both enhances the energy efficiency of the reactor assembly, but also helps reducing the complexity of the system by reduction of one further means.

### Polymerization process

Accordingly to the description of the polymerization assembly, the polymerization process is herewith also described. Generally, the process of the present invention relates to the gas phase polymerization of a polymer. Preferably, the process relates to the polymerization of polyolefins, more preferably polyolefin homo- or copolymers. In an especially preferred case, the present invention relates to a process for the polymerization of polyethylenes.

Both, Figure 1 and 2 show a process for gas phase polymerization of a polymer, comprising the steps of
a) gas phase polymerizing a polymer in a polymerizing reactor (1);
b) withdrawing an unreacted gas stream (4) from the polymerizing reactor (1);
c) pressurizing the unreacted gas stream (4) in a circulation gas compression unit (5) yielding a pressurized unreacted gas stream (7);
d) branching a circulation gas stream (8) off the pressurized unreacted gas stream (7);
e) reintroducing at least parts of the circulation gas stream (8) into step a);

The process of the present invention according to Figure 1 in contrast to the process of the prior art according to Figure 2 comprises the step of
f) pressurizing the pressurized unreacted gas stream (7) to a flush gas pressure yielding a flush gas stream.

In step a) monomers may be polymerized in the presence of a polymerization catalyst. Monomers which can thus be polymerized include olefins, diolefins and other polyenes. Thus, in step a), ethylene, propylene, 1-butene, 1-pentene, 1-hexene, 4-methyl-1-pentene, 1-heptene, 1-octene, 1-decene, styrene, norbornene, vinyl norbornene, vinylcyclohexane, butadiene, 1,4-hexadiene, 4-methyl-1,7-octadiene, 1,9-decadiene and their mixtures may be polymerized. Preferably, in step a) of the process of the present invention. ethylene and propylene and their mixtures are polymerized, optionally together with other alpha-olefin comonomers having from 4 to 12 carbon atoms.

In addition to the monomers different co-reactants, adjuvants, activators, catalysts and inert components may be introduced in step a).

Any polymerization catalyst may be used to initiate and maintain the polymerization. Such catalysts are well known in the art. Especially the catalyst should be in the form of a particulate solid on which the polymerization takes place. Suitable catalysts for olefin polymerization are, for instance, Ziegler-Natta catalysts, chromium catalysts, metallocene catalysts and late transition metal catalysts. Also different combinations of two or more such catalysts, often referred to as dual site catalysts, may be used.

Examples of suitable Ziegler-Natta catalysts and components used in such catalysts are given, for instance, in WO-A-87/07620, WO-A-92/21705, WO-A-93/11165, WO-A-93/11166, WO-A-93/19100, WO-A-97/36939, WO-A-98/12234, WO-A-99/33842, WO-A-03/000756, WO-A-03/000757, WO-A-03/000754, WO-A-03/000755, WO-A-2004/029112, WO-A-92/19659, WO-A-92/19653, WO-A-92/19658, US-A-4382019, US-A-4435550, US-A-4465782, US-A-4473660, US-A-4560671, US-A-5539067, US-A-5618771, EP-A-45975, EP-A-45976, EP-A-45977, WO-A-95/32994, US-A-4107414, US-A-4186107, US-A-4226963, US-A-4347160, US-A-4472524, US-A-4522930, US-A-4530912, US-A-4532313, US-A-4657882, US-A-4581342, US-A-4657882, EP-A-688794, WO-A-99/51646, WO-A-01/55230, WO-A-2005/118655, EP-A-810235 and WO-A-2003/106510.

Examples of suitable metallocene catalysts are shown in WO-A-95/12622, WO-A-96/32423, WO-A-97/28170, WO-A-98/32776, WO-A-99/61489, WO-A-03/010208, WO-A-03/051934, WO-A-03/051514, WO-A-2004/085499, EP-A-1752462, EP-A-1739103, EP-A-629631, EP-A-629632, WO-A-00/26266, WO-A-02/002576, WO-A-02/002575, WO-A-99/12943, WO-A-98/40331, EP-A-776913, EP-A-1074557 and WO-A-99/42497,

The catalysts are typically used with different activators. Such activators are generally organic aluminium or boron compounds, typically aluminium trialkyls, alkylaluminium halides, alumoxanes In addition different modifiers, such as ethers, alkoxysilanes, and esters and like may be used.

Further, different coreactants, may be used. They include chain transfer agents, such as hydrogen and polymerization inhibitors, such as carbon monoxide or water. In addition, an inert component is suitably used. Such inert component may be, for instance, nitrogen or an alkane having from 1 to 10 carbon atoms, such as methane, ethane, propane, n-butane, isobutane, n-pentane, isopentane, n-hexane or like. Also mixtures of different inert gases may be used.

The polymerization is conducted at a temperature and pressure where the fluidization/circulation gas essentially remains in vapour or gas phase. For olefin polymerization the temperature is suitably within the range of from 30 to 110 °C, preferably from 50 to 100 °C. The pressure is suitably within the range of from 1 to 50 bar, preferably from 5 to 35 bar.

In accordance to the explanations given in the description of the gas phase polymerization assembly, the difference of the most general embodiment of the process of the present invention according to Figure 2 to the implementation known from the prior art (Figure 1) is that the implementation of a second pressurizing step (f) after the branching of the circulation gas stream (7) from the unreacted gas stream (step d) results in less energy loss as no venting off of the circulation gas stream (8) is needed before entering step a) again. In particular only those parts of gas are additionally pressurized to the pressure needed in the flush gas stream (9), which actually also enter the flush gas stream (9). In the process known from the prior art first all parts of the unreacted gas stream (4) are pressurized with subsequent branching off of the circulation gas stream (8) and then the pressure of the circulation gas stream (8) is let down resulting in an inefficient energy loss in the process.

In the process of the prior art according to Figure 1, prior to reintroducing the circulation gas stream into step a), the pressure in the circulation gas stream is reduced using a choking valve (i.e. venting off gas): Preferably, in the process of the invention according to Figure 2, the pressure in the circulation gas stream is not reduced by more than 2 bar, preferably note reduced by more than 1 bar, and more preferably not reduced by more than 0.5 bar, before reintroduction into step a). Most preferably, the pressure of the circulation gas stream is not reduced before reintroduction into step a).

According to the second, more preferred embodiment of the present invention, the gas phase polymerization process can be further modified. Such a process includes the steps of
a) gas phase polymerizing a polymer in a polymerizing reactor (1);
b) withdrawing an unreacted gas stream (4) from the polymerizing reactor (1);
c) pressurizing the unreacted gas stream (4) in a circulation gas compression unit (5) yielding a pressurized unreacted gas stream (7);
d) branching a circulation gas stream (8) off the pressurized unreacted gas stream (7);
e) reintroducing at least parts of the circulation gas stream (8) into step a) without reducing the pressure in the circulation gas stream (8) by more than 2 bar, preferably without reducing the pressure in the circulation gas stream (8) by more than 1 bar, more preferably without reducing the pressure in the circulation gas stream (8) by more than 0.5 bar, and most preferably without reducing the pressure in the circulation gas stream (8);
f) pressurizing the pressurized unreacted gas stream (7) to a flush gas pressure yielding a flush gas stream.
g) purifying and/ or gas composition modifying at least parts of the circulation gas stream (8') in a purification / gas composition modification section (10) yielding a purified gas stream (13),
h) introducing at least parts of the purified gas stream into the unreacted gas stream (4) without modification of the pressure in the purified gas stream (13).

It should be understood that this process does not necessarily need the reintroduction of circulation gas into step a). Hence, in an alternatively preferred embodiment of the present invention, the gas phase polymerization process does not comprise the step e). In such a process, all of the circulation gas is lead into step g), e.g. into the purification / gas composition modification section. This is in particular useful, if no circulation should be carried out but the gas for the flush gas should have a certain composition / purity grade.

Apart from such modification, the preferred process of the present invention involves all advantages known from the most general embodiment of the present invention. Furthermore, the process is also more energy efficient than the process known from the prior art (i.e. Figure 3), as the re-pressurizing of the purified / gas composition modified stream occurs in the same step ^{©} as the pressurizing of the circulation gas stream (8).

According to Figure 4, the step g) preferably comprises the steps of filtering the circulation gas stream (8) and removing compounds with higher molecular weight than the monomers and/or comonomers from the circulation gas stream (8).

Both embodiments of the process according to the present invention preferably comprise the step of
i) cooling the flush gas stream

## Claims

1. A gas phase polymerization assembly comprising
- a gas phase polymerization reactor (1) having at least one inlet (2) and at least one outlet (3),
- a circulation gas compression unit (5) having an inlet and an outlet, whereby the inlet of the circulation gas compression unit (5) is fluidly connected to the at least one outlet (3) of the gas phase polymerization reactor (1) by an unreacted gas line (4);
- a flush gas compression unit (6) having an inlet and an outlet, wherein the inlet of the flush gas compression unit (6) is fluidly connected to the outlet of the circulation gas compression unit (5) by a pressurized unreacted gas line (7);
- a circulation line (8) fluidly connecting the pressurized unreacted gas line (7) with the at least one inlet (2) of the gas phase polymerization reactor (1);
- a flush gas withdrawal line (9) connected to the outlet of the flush gas compression unit (6).

2. The polymerization assembly according to claim 1, the circulation line (8) not comprising any means for reducing the pressure in said circulation line (8)

3. The polymerization assembly according to claims 1 or 2, wherein the circulation gas compression unit (5) and/or the flush gas compression unit (6) comprise at least one compressor, fan or set of fans.

4. The polymerization assembly according to claims 1 or 2, wherein the circulation gas compression unit (5) and the flush gas compression unit (6) are mechanically connected to the same source of rotational energy.

5. The polymerization assembly according to claim 4, wherein the circulation gas compression unit (5) and the flush gas compression unit (6) are overhung compressor stages on opposite sides of a motor.

6. The polymerization assembly according to claim 4, wherein the polymerization reactor (1) has a substantially cylindrical shape.

7. The polymerization assembly according to claim 3, wherein the inlet (2) of the polymerization reactor (1) is located in the lower half of the polymerization reactor (1) and/or the outlet (3) of the polymerization reactor (1) is located in the upper half of the polymerization reactor (1).

8. The polymerization assembly according to any of the preceding claims, further comprising:
- a purification / gas composition modification section (10) having an inlet and an outlet, wherein the inlet of the purification / gas composition modification section (10) is connected to the unreacted gas line (7), and
- a purified gas line (13) connecting the outlet of the purification / gas composition modification section (10) and the unreacted gas line (4).

9. The polymerization assembly according to claim 8, wherein the purification / gas composition modification section (10) further comprises a filter (11) and a heavy column (12).

10. A process for the gas phase polymerization of a polymer, comprising the steps of
a) gas phase polymerizing a polymer in a polymerizing reactor (1);
b) withdrawing an unreacted gas stream (4) from the polymerizing reactor (1);
c) pressurizing the unreacted gas stream (4) in a circulation gas compression unit (5) yielding a pressurized unreacted gas stream (7);
d) branching a circulation gas stream (8) off the pressurized unreacted gas stream (7);
e) reintroducing the circulation gas stream (8) into step a);
f) pressurizing the pressurized unreacted gas stream (7) to a flush gas pressure yielding a flush gas stream.

11. The process according to claim 9, wherein in step e) the pressure in the circulation gas stream (8) is not reduced by more than 2 bar, preferably is not reduced by more than 1 bar, more preferably is not reduced by more than 0.5 bar, and most preferably is not reduced.

12. The process according to claims 9 and 10, wherein step a) is carried out at a temperature in the range of from 30 to 110 °C, preferably from 50 to 100 °C.

13. The process according to any of the preceding claims 10 to 12, wherein step a) is carried out at a pressure in the range of from 1 to 50 bar, preferably from 5 to 35 bar.

14. The process according to any of the preceding claims 10 to 13, further comprising the steps of:
g) purifying and/ or gas composition modifying at least parts of the circulation gas stream (8') in a purification / gas composition modification section (10) yielding a purified gas stream (13),
h) introducing at least parts of the purified gas stream into the unreacted gas stream (4) without modification of the pressure in the purified gas stream (13).

15. The process according to claim 14, wherein step g) comprises the steps of filtering the circulation gas stream (8) and removing compounds with higher molecular weight than the monomers and/or comonomers from the circulation gas stream (8).
